# EUROPEAN PATENT APPLICATION

(11) **EP 4 644 232 A1**
(43) Date of publication of application: **05.11.2025**
(21) Application number: 25173127.9
(22) Date of filing: 29.04.2025
(51) Int. Cl.: B64C 3/54, B64C 23/06

(54) **ACTUATION OF A MOVEABLE WING TIP DEVICE**

(30) Priority: 30.04.2024 GB 202406048
(71) Applicant: Airbus Operations Limited, Bristol BS34 7PA (GB)
(72) Inventor: CLARK, Timothy, Bristol, BS34 7PA (GB); AGMEN, Keith, Bristol, BS34 7PA (GB)
(74) Representative: Abel & Imray LLP

(57) **Abstract**

A method of actuating a wing tip device 11 on an aircraft 1, from a flight configuration to a ground configuration in which the span is reduced. The method comprises the steps of 100 receiving data indicative of a condition, such as the location 23 or speed 25 of the aircraft; and determining an actuation profile in dependence on the condition. The actuation profile may include determining a time period, and/or speed profile of the wing tip actuation over that time period. In this manner the actuation of the wing tip device can be tailored to minimise loads and wear on the actuator assembly.

## Description

### BACKGROUND OF THE INVENTION

The present disclosure relates to a method of actuating a moveable wing tip device. The present disclosure also concerns an aircraft configured to actuate a wing tip device from a flight configuration to a ground configuration.

There is a trend towards increasingly higher aspect ratio wings for large passenger aircraft, for which it is desirable to have correspondingly large wing spans. However, the maximum aircraft span is effectively limited by airport operating rules which govern various clearances required when manoeuvring around the airport (such as the span and/or ground clearance required for gate entry and taxiway usage).

Therefore, movable wing tip devices have been introduced into passenger aircraft, where a wing tip device is movable between a flight configuration for use during flight, and a ground configuration for use during ground-based operations. In the flight configuration, the wing tip device forms an extension of the wing and contributes to the lift generated by the wing. In the ground configuration, the wing tip device is moved away from the flight configuration such that the span of the aircraft wing is reduced, thereby allowing use of existing gates and taxiways. Such an arrangement is sometimes referred to as a 'folding wing tip'. Some folding wing tip arrangements are shown in, for example, US2017355437 (Airbus Operations Limited) and US2019359312 (Airbus Operations GmbH).

It is necessary to provide an actuation assembly to actuate the wing tip device from the flight configuration to the ground configuration. It is known to provide a control system for controlling the actuation assembly for actuating the wing tip device. For example, US10301007 (Boeing) discloses an arrangement in which a status of an aircraft or a wing fold system, is received by the wing fold controller. The wing fold controller may receive an automated command in response to receiving the status (for example in response to a status indicating that the aircraft is in an airport location in which the wing should be folded). The wing fold controller then operates the wing fold system based on the automated command and the status.

There is a known desire to minimise the size/weight of such an actuation assembly. By way of example, US2017190410 (Boeing) and US2020010177 (Airbus Operations Limited) both disclose arrangements that seek to enable smaller/lighter actuators to be used. In US'410 this is achieved by reducing the aerodynamic loads on the wing tip prior to actuation. In US'177 this is achieved by the actuator acting on a spar beam coupled to the wing tip.

There continues to be a desire to improve the actuation of a moveable wing tip device.

### SUMMARY OF THE INVENTION

According to a first aspect of the present disclosure, there is provided a method of actuating a wing tip device on an aircraft, from a flight configuration to a ground configuration. The method comprises the steps of: determining an actuation profile in dependence on a condition, and actuating the wing tip device in accordance with the actuation profile. The actuation may be such that the actuation of the wing tip device is tailored in dependence on the condition.

The aircraft may comprise an actuation assembly configured to move the wing tip device between the flight configuration and the ground configuration. The actuation assembly may be arranged to effect the actuation profile. According to aspects of the disclosure, the actuation profile of the wing tip device may be tailored to minimise the wear, for example the wear arising due to fatigue loadings, on the actuation assembly. This is beneficial because it may enable the working life of the actuation assembly to be extended, and/or the size of the actuation assembly to be reduced.

The method of the first aspect of the disclosure comprises the step of determining an actuation profile in dependence on the condition. This is in contrast to, for example, known arrangements such as US10301007, which have a single pre-determined actuation process (e.g. fold/don't fold) to move the wing tip device from the flight configuration to the ground configuration.

The step of determining the actuation profile may comprise the step of determining the time period over which the wing tip device is to be moved from the flight configuration to the ground configuration. The step of determining the actuation profile may comprise the step of determining when the actuation starts. The step of determining the actuation profile may comprise the step of determining when the actuation stops. Arrangements having one or more of the above-mentioned features may be beneficial because this may allow the actuation of the wing tip device to be conducted over a relatively long time period, where circumstances allow (for example if there is adequate time before the aircraft reaches a gate limit). Having more time may allow a less aggressive movement of the wing tip device, thereby limiting loads and wear on the actuation assembly.

The step of determining the actuation profile may comprise the step of determining a speed profile at which the wing tip device is to move, as it is actuated from the flight configuration to the ground configuration. The speed may be the speed at which the wing tip device rotates relative to a datum. The speed may be measured as a rotational speed, for examples in degrees/second. The speed profile may comprise a maximum speed threshold. The speed profile may be selected from a library of speed profiles. Arrangements having one or more of the above-mentioned features may be beneficial because this may allow the actuation of the wing tip device to be conducted relatively slowly, where circumstances allow (for example if there is adequate time before the aircraft reaches a gate limit). Slower movement of the wing tip device may limit the loads and wear on the actuation assembly.

It will be appreciated that in many circumstances there is an inter-play between the time over which the wing tip device is moved, and the speed profile at which the wing tip device is to move. In preferred embodiments of the disclosure, the method may comprise the step of determining the time period over which the wing tip device is to be moved from the flight configuration to the ground configuration, and the step of determining the speed profile at which the wing tip device is to move during that time period. The step of determining the actuation profile may comprise the step of determining the rate of actuation.

The actuation profile is determined in dependence on a condition. The method of the first aspect of the disclosure may comprise the step of receiving data indicative of the condition.

The data may comprise location data. In such arrangements, the condition (of which the data is indicative) may be the location of the aircraft. The condition may be the distance between the aircraft and a target location. The target location may be a gate-limit location. The gate-limit location may be a location in the airport at which the wing tip device should be in the ground configuration (for example to ensure compliance with span limitations).

The data may comprise speed data. The condition (of which the data is indicative) may be the speed of the aircraft.

The data may comprise load data. The condition (of which the data is indicative) may be the load, for example the aerodynamic load, on the wing tip. The condition (of which the data is indicative) may be the load on the actuation assembly.

The method may comprise the step of receiving data on a plurality of conditions. In such embodiments, the step of determining an actuation profile may be in dependence on the plurality of conditions. For example, the data may comprise one or more of location data, speed data, load data, and ground data (such as, for example, wind speeds or data relating other weather conditions at the airport). The plurality of conditions may comprise the associated conditions described above.

The data may be measured data. For example, the data may be derived from an output of a sensor. The sensor may be a location sensor such as a GPS sensor. The sensor may be a speed sensor.

The data may be modelled data. For example, the data may be derived from a model for estimating a condition.

According to another aspect of the disclosure there is provided a method of actuating a folding wing tip on an aircraft, the method comprising the step of determining an actuation profile for actuating the folding wing tip, the actuation profile being determined by setting a time period over which the wing tip device may be actuated, and setting a speed profile at which the wing tip device is to be actuated over that time period. The setting of the time period and/or the speed profile is preferably made in dependence on at least one or more of the following conditions: the speed of the aircraft; the location of the aircraft in the airport; the layout of the airport; the load on the folding wing tip. The method may comprise performing the steps using an actuator assembly control system comprising one or more processors and a memory. The method may further comprise the step of actuating the folding wing tip in accordance with the actuation profile, using an actuation assembly.

The above-mentioned methods according to aspects of the disclosure are for actuating a wing tip device on an aircraft, from a flight configuration to a ground configuration. The method has been found to be especially beneficial for this direction of movement because this is the direction of movement in which the loads on the actuation assembly tend to be greatest. In the flight configuration, the span of the wing may exceed an airport compatibility gate limit. In the ground configuration the span is reduced. In the ground configuration, the span may be less than, or substantially equal to, the airport compatibility gate limit. In the ground configuration, the wing tip device may be positioned such that the wing has its shortest span. In the ground configuration, the wing tip device may be oriented substantially vertically.

According to other aspects of the disclosure, the method may also be applied to actuation of the wing tip device in the reverse motion - i.e. from the ground configuration to the flight configuration. According to this further aspect of the disclosure, the method comprises the steps of: receiving data indicative of a condition; determining an actuation profile in dependence on the condition, and actuating the wing tip device in accordance with the actuation profile, from the ground configuration to the flight configuration, such that the actuation of the wing tip device is tailored in dependence on the condition. It will be appreciated that features described herein in relation to the method of actuating from the flight configuration to the ground configuration may be incorporated into the method of actuating the reverse of that motion.

According to another aspect of the disclosure, there is provided an aircraft comprising a wing tip device actuatable between a flight configuration and a ground configuration, the aircraft comprising: an actuator assembly for actuating the wing tip device between the two configurations, and a controller configured to carry out the method as described herein with reference to the other aspects of the disclosure.

According to another aspect of the disclosure, there is provided an actuator control system comprising: one or more processors, and memory, wherein the actuator control system is arranged to perform, using the one or more processors, a method as described herein with reference to the other aspects of the disclosure. The actuator control system may be a module within the avionics system of the aircraft.

According to another aspect of the disclosure, there is provided a computer program product arranged, when executed on a computing system comprising one or more processors and memory, to cause an actuation control system to perform, using the one or more processors, a method as described herein with reference to the other aspects of the disclosure.

The aircraft may comprise a wing, the wing comprising a fixed wing and wing tip device. The wing tip device may be moveable, at the end of the fixed wing, from the flight configuration to the ground configuration.

The fixed wing may have an upper surface and a lower surface. The wing tip device may have an upper surface and a lower surface. In the flight configuration, the upper and lower surfaces of the wing tip device may be continuations of the upper and lower surfaces of the fixed wing. In the flight configuration, the trailing edge of the wing tip device may be a continuation of the trailing edge of the fixed wing. The leading edge of the wing tip device may be a continuation of the leading edge of the fixed wing. It may be that there is a smooth transition from the fixed wing to the wing tip device. It will be appreciated that there may be a smooth transition even when the shape of the wing is such that there are changes in sweep or twist at the junction between the fixed wing and wing tip device. It may be that there are no discontinuities at the junction between the fixed wing and wing tip device.

It may be that rotation of the wing tip device from the flight configuration to the ground configuration comprises upward rotation of the wing tip device relative to the fixed wing. In this way, the wing may comply with an airport compatibility gate limit, while also maintaining a reasonable ground clearance.

It may be that the wing tip device rotates in a first direction from the flight configuration to the ground configuration. It may be that the wing tip device rotates in a second direction, opposite to the first direction, from the ground configuration to the flight configuration.

The wing tip device may be a wing tip extension, for example a generally planar tip extension. In other embodiments, the wing tip device may comprise, or consist of, a non-planar device, such as a winglet.

The span ratio of the fixed wing relative to the wing tip device may be such that the fixed wing comprises at least 60%, 70%, 80%, 90%, or more, of the overall span of the wing.

When the wing tip device is in the ground configuration, the aircraft may be unsuitable for flight. For example, the wing tip device may be aerodynamically and/or structurally unsuitable for flight in the ground configuration. The aircraft is preferably configured such that, during flight, the wing tip device is not moveable to the ground configuration. The aircraft may comprise a sensor for sensing when the aircraft is in flight. When the sensor senses that the aircraft is in flight, a control system is preferably arranged to disable the possibility of moving the wing tip device to the ground configuration. In the ground configuration the wing tip device may be held in place. For example the wing tip device may be latched or locked in place to prevent movement back towards the flight configuration.

The wing tip device is moveably mounted at a joint at the end of the fixed wing. The joint may be a hinge joint. The joint may comprise a plurality of lugs. A hinge axis may pass through the plurality of lugs, the wing tip device being rotatable about said hinge axis, between the flight and ground configurations.

The aircraft may be a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and optionally more than 75 passengers. The aircraft may be a commercial aircraft, for example a commercial passenger aircraft, for example a single aisle or twin aisle aircraft. The aircraft need not be configured for carrying passengers, but could for example be an aircraft of an equivalent size configured for cargo and/or used on a non-commercial basis. The aircraft may have a maximum take-off weight (MTOW) of at least 20 tonnes, optionally at least 40 tonnes, and possibly 50 tonnes or more. The aircraft may have an operating empty weight of at least 20 tonnes, optionally at least 30 tonnes, and possibly about 40 tonnes or more.

It will of course be appreciated that features described in relation to one aspect of the present invention may be incorporated into other aspects of the present invention. For example, the method of the invention may incorporate any of the features described with reference to the apparatus of the invention and *vice versa.*

### DESCRIPTION OF THE DRAWINGS

Embodiments of the present invention will now be described by way of example only with reference to the accompanying schematic drawings of which:
Figures 1A and 1B shows a plan view and a frontal view respectively, of an aircraft according to a first embodiment of the invention;
Figure 2 is flow-chart showing the method steps conducted by the processor in the actuator control system in the aircraft of Figure 1A;
Figure 3A is schematic illustrating a first scenario encountered by the aircraft of Figure 1A;
Figure 3B is schematic illustrating a second scenario encountered by the aircraft of Figure 1A;
Figure 4 is a chart showing two different actuation profiles for the scenarios in Figures 3A and 3B;
Figure 5 is flow-chart showing the method steps conducted by the processor in an actuator control system in an aircraft of a second embodiment;
Figure 6 is a speed/distance graph for an aircraft of a second embodiment of the invention in the scenarios in Figures 3A and 3B.

### DETAILED DESCRIPTION

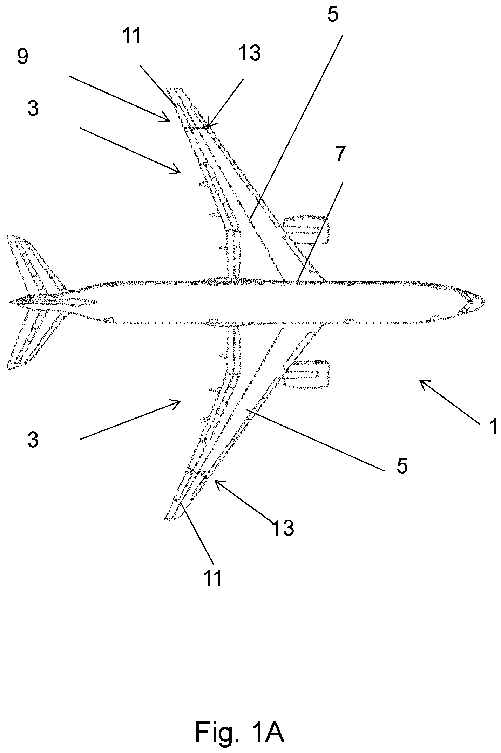

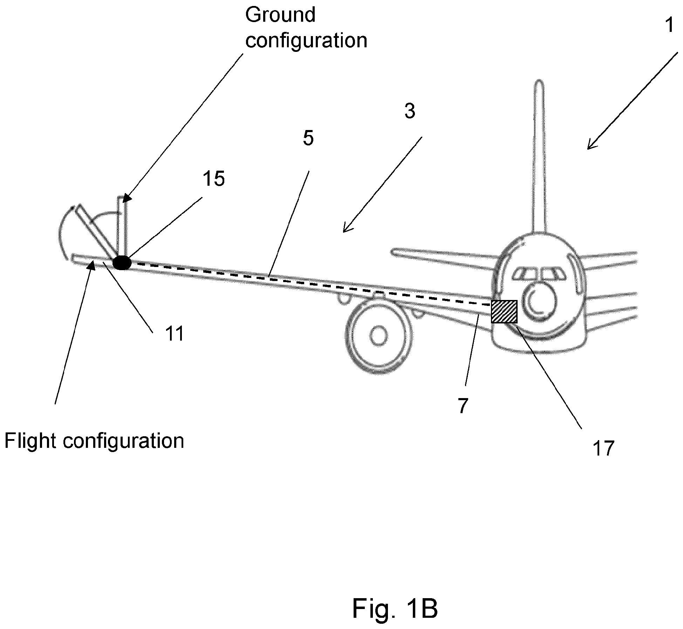

Referring first to Figures 1A and 1B, these figures show a plan view and a front view of an aircraft 1 according to a first embodiment. The aircraft 1 comprises two main wings 3 extending outwardly from the fuselage (one wing is not fully visible in Figure 1B). Each wing 3 comprises a fixed wing 5 extending from the root 7 to the tip 9. At the tip 9 of the fixed wing 5, the wing 3 also comprises a moveable wing tip device 11. In this embodiment, the wing tip device 11 comprises a planar wing tip extension. The wing tip device 11 is rotatably mounted on a hinge joint 13 (see Figure1A), having a hinge axis. As such, the wing tip device 11 is able to rotate about the hinge joint 13 relative to the fixed wing 5.

The aircraft 1 also comprises an actuator assembly 15 (shown schematically in Figure 1B at the hinge axis) operable to rotate the wing tip device 7 about the hinge joint 13. Referring to Figure 1B, the wing tip device 11 is rotatable about the hinge joint 13 between a flight configuration, and a ground configuration. Figure 1B also shows the wing tip device 11 when moving part-way between these two configurations.

In the flight configuration, the wing tip device 11 is an extension of the fixed wing 5. Accordingly, the upper and lower surfaces of the fixed wing 5 are continuous with the upper and lower surfaces of the wing tip device 11. The leading and trailing edges of the fixed wing 5 are also continuous with the respective leading and trailing edges of the wing tip device 11 (see Figure 1A). Such an arrangement is beneficial as it provides a relatively large wing span during flight, thereby providing an aerodynamically efficient aircraft.

The wing tip device 11 is rotatable, upwards, from the flight configuration to a ground configuration in which the wing tip device 11 is rotated, to a substantially upright position (shown in Figure 1B). The wing tip device 11 is moveable to this configuration when the aircraft 1 is on the ground. Once rotated to such a position, the span of the aircraft 1 is sufficient to meet airport compatibility gate limits. Thus, the aircraft 1 of the first embodiment can have a large span (exceeding gate limits) during flight, but is still able to comply with gate limits when on the ground.

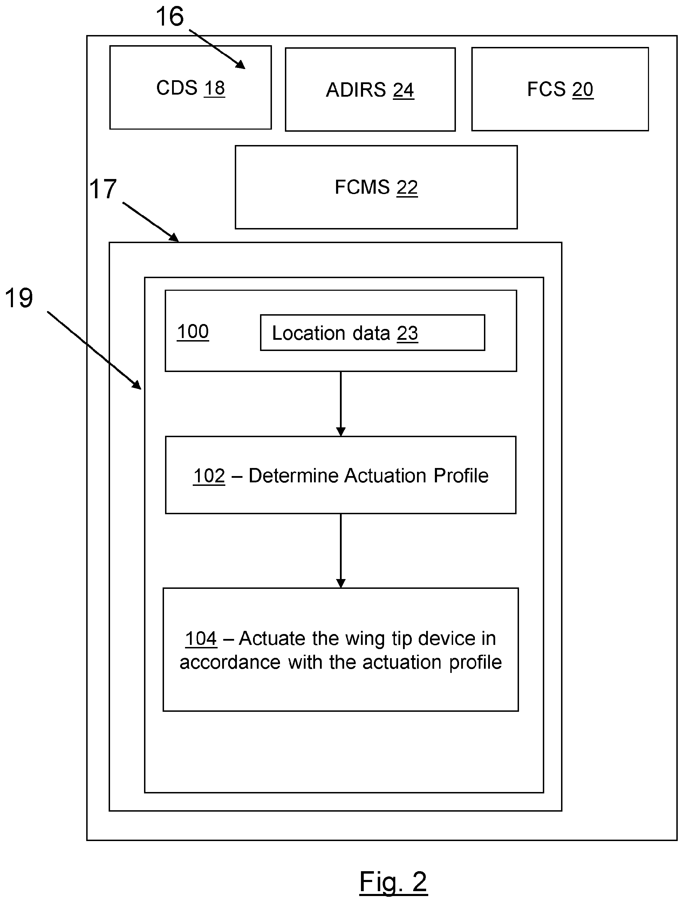

The actuator assembly 15 is in communication with an actuator control system 17. In the first embodiment of the invention, the actuator control system 17 is configured to control the actuator assembly 15 in a manner that tailors the actuation of the wing tip device 11 depending on various conditions. This allows the life-span of the actuator assembly 15 to be increased, and/or allows the actuator assembly 15 to be of lower capacity than might otherwise be required. This control process is described in more detail below with reference to Figure 2, which is a flow diagram showing the steps of a method carried out in a processor 19 of the control system 17. The actuator control system 17 is part of the core processing input/output module of the aircraft avionics system 16. The actuator control system 17 is connected to the aircraft avionics system 16 via an AFDX network to transmit and receive data with other aircraft control modules and systems. Those modules and systems include the aircraft cockpit control and display system (CDS) 18, the flight control system (FCS) 20, the flight management system (FCMS) 22 and the air data/inertial reference system (ADIRS) 24.

As a first step 100, the processor 19 receives a set of location data. The location data 23 is received via an input from the pilot from the aircraft cockpit human machine interface (HMI) of the aircraft control and display system (CDS) and represents which runway the aircraft is intending to land at (if more than one runway is available), along with which exit the aircraft is going to take from that runway once landed. These parameters have been agreed between the pilot and an airport controller as the aircraft is in the approach phase. The location data 23 also includes a data file specifying the parameters of the airport at which the aircraft is landing, which contains parameters such as the locations at which span-limit restrictions apply at the airport (for example at airport gates). This data file is contained in a library of airport data files pre-loaded into a memory module on the aircraft.

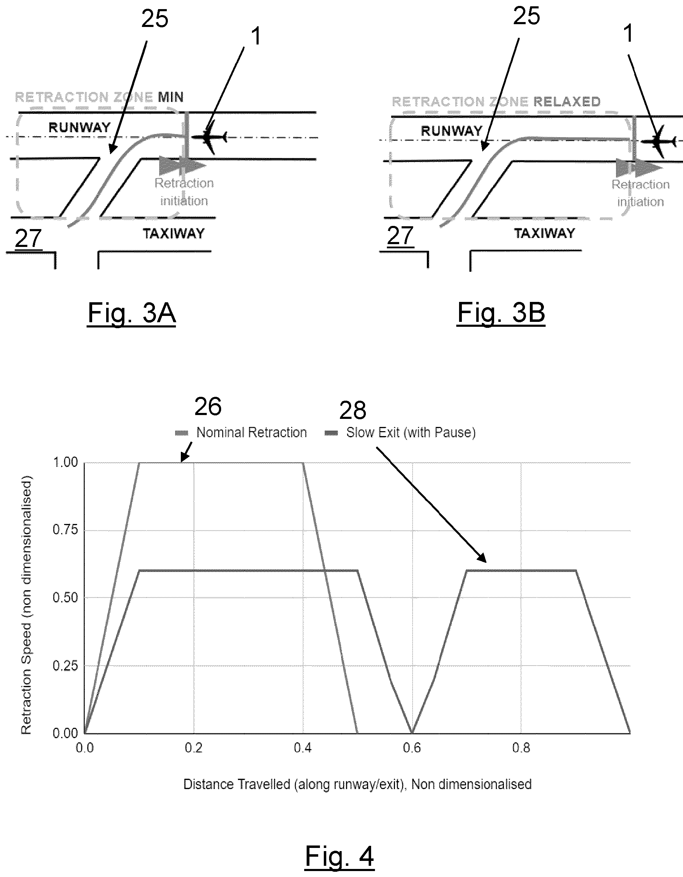

As a next step 102, the processor determines a suitable actuation profile for the wing tip device. In the first embodiment, this actuation profile is determined in dependence on the location data 23. Two example landing scenarios are shown in Figures 3A and 3B. Figure 4 is an illustration of how the location data can be used to determine actuation profiles for different scenarios, and these two scenarios will now be referred to in more detail.

Figure 3A illustrates an example scenario in which the aircraft 1 lands relatively close to the desired runway exit 25. In this airport, the aircraft span limit applies once the aircraft enters the taxiway 27 (although it may be that in other airports the span limit may apply further from the runway and closer to the gates). The retraction zone, in which the wing tip device must be moved from the flight to the ground configuration, is therefore relatively short (shown in dashed lines in Figures 3A).

Figure 3B illustrates an example scenario in which the aircraft 1 lands at the same airport, but relatively far away from the desired runway exit 25. The retraction zone, in which the wing tip device must be moved from the flight to the ground configuration, is therefore relatively long (shown in dashed lines in Figures 3B).

In both scenarios, the length of the retraction zone is a function of the exit choice and the layout of the airport, and is therefore derivable from the location data 23 described above with reference to Figure 2.

Aspects of the present invention have recognised that the actuation profile of the wing tip device 11 (for movement from the flight to the ground configuration) may be tailored in different scenarios such as these. More specifically, the actuation profile may be tailored to minimise the loading on the actuation assembly 15.

Figure 4 shows the two different actuation profiles determined by the control system 17 for the two different scenarios in Figures 3A and 3B. The actuation profile is a measure of the manner in which the actuation assembly is used to move the wing tip device 11. It is therefore representative of the resulting rotational movement of the wing tip device over time. Accordingly, the actuation profile is represented in Figure 4 by the rotational speed at which the wing tip device retracts from the flight to the ground configuration. It may be that an actuation profile can also be represented in other ways (for example by the input instructions, or the variation in actuation speed of parts of the actuation assembly, over time).

In the Figure 3A scenario in which the control system 17 has determined there is a short retraction zone, the actuation profile 26 comprises a single-step movement of retracting the wing tip device at a relatively high speed over a short time period (with appropriate acceleration and deceleration of the wing tip at start and finish). Those acceleration and/or deceleration phases may, in some embodiments of the invention, be predetermined as selected parts within the overall actuation profile (for example the final deceleration phase may be predetermined to ensure the wing tip device comes to a stop in a suitable manner) The actuation profile 26 illustrated in Figure 4, for the scenario in Figure 3A, ensures the wing tip device is retracted to the ground configuration in time for the aircraft to enter the taxiway, but it places a relatively high load on the actuation assembly.

In the Figure 3B scenario in which the controller has determined there is a longer retraction zone, the actuation profile 28 comprises a two-step movement of retracting the wing tip device at just above half-speed, with a pause 60% of the way along the path. This still ensures the wing tip device is retracted to the ground configuration in time for the aircraft to enter the taxiway, but it recognises that this can be done at a slower speed, over a longer time period, and therefore places a relatively low load on the actuation assembly, thereby avoiding excessive wear and increasing the life of the actuator assembly.

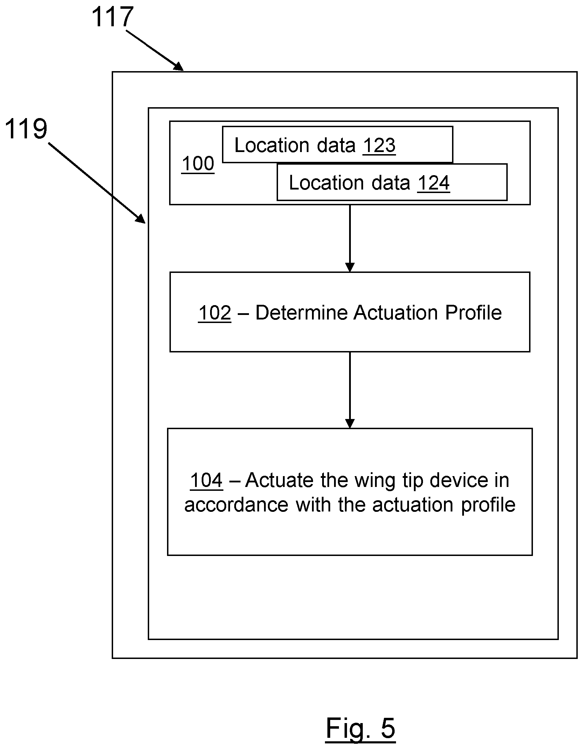

A control system 117 and a processor 119 in an aircraft of a second embodiment of the invention is shown in Figure 5 (the overall avionics system in the second embodiment is not illustrated in Figure 5 as it broadly corresponds to the avionics system in the first embodiment). The aircraft and the control system 117 operate as described with reference to the first embodiment in Figures 1 to 4, but the control system 117 in this second embodiment also makes use of speed data 124 to yet further tailor the actuation profile. The speed data 124 is received via an airspeed sensor on the aircraft and represents a real-time measurement of the aircraft speed.

In the second embodiment of the invention, the processor 119 receives both the location data 123 and the speed data 124. Using both these sets of data, the control system 117 determines a suitable actuation profile.

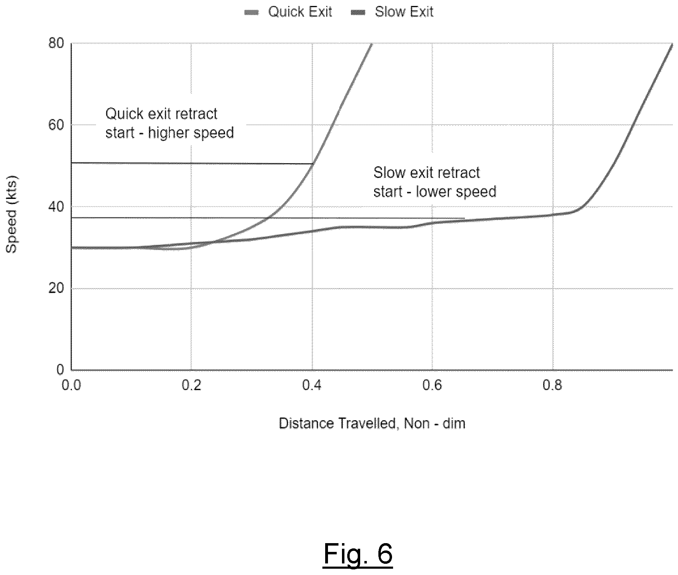

Figure 6 shows a plot of aircraft speed against distance travelled for both the scenarios in Figures 3A and 3B, but involving the aircraft of the second embodiment. The left-hand plot is the short-exit (i.e. quick exit) scenario in Figure 3A, and the righthand plot is the longer exit (i.e. slow exit) scenario in Figure 3B.

In the quick exit scenario, the actuation assembly is operated largely as per the first embodiment, except that the start of actuation is also dependent on a threshold speed being reached (shown by the horizontal line on the plot of Figure 6). The actuation profile is tailored so that the actuation assembly only starts to retract the wing tip device once the aircraft speed (as indicated by the speed data) has fallen below 50kts. The aerodynamic forces on the wing tip device are proportional to the air speed, so deferring the start of actuation until the aircraft has fallen below a threshold speed may reduce the loads required from the actuation assembly.

In the slow exit scenario, the start of actuation is delayed until a lower threshold speed has been reached (also shown by the horizontal line on the plot of Figure 6). In this scenario, the actuation profile is tailored so that the actuation assembly only starts to move the wing tip device once the aircraft speed (as indicated by the speed data) has fallen below 38kts. Given the extra runway distance available, the actuation profile can also take place over a longer time frame, so actuation commences further up the runway. The resulting actuation profile is similar in shape to that shown for the slow-exit scenario in the first embodiment, except that there is no pause during the movement. The resulting slower movement, and the fact that the movement is also being conducted at a lower aircraft speed, may reduce the loads required from the actuation assembly.

As illustrated by the above-mentioned example embodiments, the control system 17/117 allows the actuation profile to be tailored, based on a number of conditions (e.g. available distance, aircraft speed) in order to minimise loads/wear on the actuation assembly. This is beneficial because it may enable the working life of the actuation assembly to be extended, and/or the size of the actuation assembly to be reduced.

Whilst the present invention has been described and illustrated with reference to particular embodiments, it will be appreciated by those of ordinary skill in the art that the invention lends itself to different variations not specifically illustrated herein. By way of example only, certain possible variations will now be described.

In a further embodiment of the invention (not shown) the control system receives data indicative of estimated loads on an actuation assembly in response to a gust detected upstream of the wing tip device. In response to this data, the controller adjusts the actuation profile and pauses actuation of the wing tip device until the gust has passed.

In a further embodiment of the invention (not shown) the control system receives location data indicative of the intended landing point and the span-limit boundary location, and an estimated distance between those two locations. The control system selects an actuation profile from a library of profiles, suitable for moving the wing tip device from the flight configuration to the ground configuration over that distance.

In a further embodiment of the invention (not shown) the controller receives location data indicative of the live location of the aircraft via GPS or via inertial guidance system data available to the controller via the ADIRS. The processor calculates the distance between the actual aircraft location, once it has touched down, and the span-limit boundary location. The controller determines an actuation profile based on that location data.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A method of actuating a wing tip device on an aircraft, from a flight configuration to a ground configuration, the method comprising the steps of:
receiving data indicative of a condition;
determining an actuation profile in dependence on the condition; and
actuating the wing tip device in accordance with the actuation profile, such that the actuation of the wing tip device is tailored in dependence on the condition.

2. A method according to claim 1, wherein the step of determining the actuation profile comprises the step of determining the time period over which the wing tip device is to be moved from the flight configuration to the ground configuration.

3. A method according to claim 1 or claim 2, wherein the step of determining the actuation profile comprises the step of determining a speed profile at which the wing tip device is to move, as it is actuated from the flight configuration to the ground configuration.

4. A method according to any preceding claim, wherein the data comprises location data indicative of the distance between the aircraft and a target location.

5. A method according to any preceding claim, wherein the data comprises speed data indicative of the speed of the aircraft.

6. A method according to any preceding claim, wherein the data comprises load data, indicative of the load on an actuation assembly configured to actuate the wing tip device.

7. A method of actuating a folding wing tip on an aircraft from a flight configuration to a folded configuration, the method comprising the steps of:
(i) determining an actuation profile for actuating the folding wing tip,
wherein the actuation profile is determined by setting a time period over which the wing tip device may be actuated, and setting a speed profile at which the wing tip device is to be actuated over that time period,
and wherein the setting of the time period and/or the speed profile is made in dependence on at least one or more of the following conditions:
the speed of the aircraft;
the location of the aircraft in the airport;
the layout of the airport; and/or
the load on the folding wing tip,
and (ii) actuating the folding wing tip, in accordance with the actuation profile, using an actuation assembly on the aircraft.

8. An aircraft comprising a wing tip device actuatable between a flight configuration and a ground configuration, the aircraft comprising:
an actuator assembly for actuating the wing tip device between the two configurations, and
a controller configured to carry out the method of any of claims 1-7.

9. An actuator control system comprising:
one or more processors; and
memory,
wherein the actuator control system is arranged to perform, using the one or more processors, a method according to any of claims 1 to 7.

10. A computer program product arranged, when executed on a computing system comprising one or more processors and memory, to cause an actuation control system to perform, using the one or more processors, a method according to any of claims 1 to 7.
